(19) Europäisches Patentamt
European Patent Office
Office européen des brevets

(11) Publication number: **0 083 130**
**B1**

(12) **EUROPEAN PATENT SPECIFICATION**

(45) Date of publication of patent specification: **28.05.86**

(51) Int. Cl.[4]: **C 08 L 63/02,** C 08 G 59/68

(21) Application number: **82201607.7**

(22) Date of filing: **14.12.82**

(54) **Curable epoxy compositions and their preparation.**

(30) Priority: **14.12.81 US 330412**
**05.03.82 US 355082**

(43) Date of publication of application:
**06.07.83 Bulletin 83/27**

(45) Publication of the grant of the patent:
**28.05.86 Bulletin 86/22**

(84) Designated Contracting States:
**DE FR GB IT**

(56) References cited:
**FR-A-1 109 462**
**GB-A- 884 580**
**GB-A-1 069 438**
**US-A-4 284 753**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Brownscombe, Thomas Fairchild**
**2737 Amherst**
**Houston Texas (US)**

(74) Representative: **Aalbers, Onno et al**
**P.O. Box 302**
**NL-2501 CH The Hague (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 083 130 B1

Courier Press, Leamington Spa, England.

**Description**

This invention relates to curable epoxy compositions.

Numerous curable epoxy compositions are known and the patents issued on curable epoxy compositions number in the hundreds. Known curing agents for such compositions include, among many others, polycarboxylic acids and anhydrides, amines, polyamides, and imidazoles. Representative curing agents are described in US—A—3 336 241. These curing agents may be employed with one or more catalysts or accelerators such as the stannous salts of monocarboxylic acids.

It will be appreciated that each and every one of the known epoxy-curing systems exhibits advantages over other systems, and as importantly, disadvantages over the same systems. There is, of course, a continuing need to develop improved epoxy curing compositions.

In FR—A—1 109 462 the curing of polyepoxides with fluoroborides of Mg, Cd and Ca has been disclosed. In GB—A—884 580 the curing of polyepoxides with $LiBF_4$ has been disclosed.

A curable epoxy composition has now been found which is not only simple and rapidly curable, but the resulting cured epoxy compositions exhibit excellent physical properties.

According to the present invention there is provided a curable composition comprising:

(1) an epoxy compound having on average more than one epoxy group per molecule,

(2) a curing amount of at least one metal salt catalyst of formula

$$M(XF_n)_p$$

where M is lithium or a Group II metal, X is boron, arsenic, antimony or phosphorus, n is 4 when X is boron and is 6 when X is arsenic, antimony or phosphorus and p is 1 when M is lithium and is 2 when M is a Group II metal, and

(3) an ethylenically unsaturated monomer.

Suitable epoxy compounds for inclusion in the compositions of the invention comprise those compounds containing on average at least one epoxy group per molecule, i.e. at least one

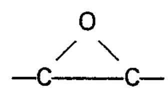

group. These epoxy compounds may be saturated or unsaturated, aliphatic, cycloaliphatic, aromatic or heterocyclic and may be substituted if desired with non-interfering substituents such as halogen atoms, hydroxyl groups, and ether radicals. They may also be monomeric or polymeric.

Various examples of liquid epoxy compounds that may be used in the process of the invention are given in US—A—2 633 458. Other suitable epoxy compounds are disclosed in US—A—3 373 221 and 3 377 406.

Preferred epoxy compounds are the glycidyl polyethers of polyhydric phenols and polyhydric alcohols, especially the glycidyl polyethers of 2,2 - bis(4 - hydroxyphenyl)propane, particularly those having an average molecular weight between 300 and 3,000 and an epoxide equivalent weight between 140 and 2,000.

Other suitable epoxy compounds include those compounds derived from polyhydric phenols and having at least one vicinal epoxy group wherein the carbon-to-carbon bonds within the six-membered ring are saturated. Examples of such epoxy compounds are described in US—A—3 336 241 wherein n has a value so that the average molecular weight of the saturated polyepoxide is from about 350 to about 3,000.

Preferred saturated epoxy compounds are the hydrogenated glycidyl ethers of 2,2 - bis(4 - hydroxyphenyl)propane, sometimes called the diglycidyl ethers of 2,2 - bis(4 - cyclohexanol)propane.

Other examples of suitable epoxy compounds are the glycidyl novolac resins, i.e., the phenol-aldehyde condensates, as described in US—A—2 658 885.

Preferred ethylenically unsaturated monomers are the unsaturated aromatic monomers such as styrene, alpha-methyl styrene; halo-substituted styrenes such as chlorostyrene; nitro-substituted styrenes such as nitrostyrene; alkyl-substituted styrenes such as tertiary-butyl styrene; divinylbenzene, vinyl toluene; 2-vinyl pyridine; N-vinyl pyrrolidone; and vinyl naphthalene. Especially preferred is styrene.

Other suitable monomers, which are preferably blended with styrene, include, (1) esters of ethylenically unsaturated carboxylic acids, (2) cyano-containing unsaturated compounds, (3) allyl-containing compounds, and (4) olefins or diolefins and (5) alkyl phenols.

Suitable unsaturated monocarboxylic acid esters include the alkyl esters of ethylenically unsaturated acids such as acrylic acid, methacrylic acid, crotonic acid, alpha-phenylacrylic acid, itaconic acid, citraconic acid, fumaric acid, cyanoacrylic acid and methoxyacrylic acid. Preferred acids are acrylic acid and methacrylic acid. Accordingly, suitable such esters include, methyl methacrylate, ethyl acrylate, butyl acrylate, butyl methacrylate, isobutyl methacrylate, pentaerythritol triacrylate, and trimethylolpropane trimethacrylate.

Suitable cyano-compounds include acrylonitrile and methacrylonitrile.

Suitable allyl monomers include diallyl phthalate and triallyl isocyanurate.

Suitable alkyl phenols include nonyl phenol and lower and higher homologues, and alkylated bisphenol acetone or other diphenols. Other suitable comonomers include the unsaturated aliphatic compounds such as the olefins and diolefins. Operable such olefins and diolefins include ethylene, propylene, butylene, amylene, butadiene, isoprene, vinyl hexane, vinyl cyclohexanes, vinyl cyclohexene, vinyl cyclopentane, vinyl cyclopentene, norbornadiene, cyclopendadiene and cyclopentadiene dimer. It will be appreciated that since some of these monomers are normally gases at ambient temperatures and pressures, their use dictates that the compositions be formulated and cured under pressure conditions. Accordingly, they may be useful in reaction injection moulding (RIM) processes.

The ethylenically unsaturated monomer(s) are preferably included in amounts ranging from 10 to 200 parts by weight of ethylenically unsaturated monomer(s) per 100 parts by weight of epoxy compound.

Preferred metal salt catalysts are those wherein M is lithium, magnesium or calcium. Metal salt catalysts wherein X is phosphorus or, particularly, boron are preferred. In particular the fluoborates of lithium and calcium are preferred.

The metal salt catalyst may typically be included in an amount from 0.05 to 15 parts by weight per hundred parts by weight of epoxy compound (phr), preferably 0.1 to 10.0 phr and more preferably 0.5 to 2.0 phr.

The compositions of the invention may be prepared by various techniques. If, for example, the compositions are to be utilized within a short time, they can be simply prepared by mixing all the components, then, if desired, adding one or more of the customary additives such as solvents; fillers; reinforcement fibres; mat and bars; pigments; flame retardant agents; antioxidants; plasticizers; stabilizers; extenders; and thiotropic agents; and then forming (moulding) and curing the resulting composition. The resulting formed articles also form part of the invention.

A preferred process of preparing compositions of the invention comprises preparing a catalyst composition by blending the metal salt catalyst with a solvent and a finely divided inert inorganic material, optionally evaporating at least a part of the solvent, and mixing the resulting composition, with the ethylenically unsaturated compound and the epoxy compound.

Examples of suitable solvents include water and oxy-containing solvents such as alcohols, glycols and glycol ethers as well as ketones and other organic solvents. Suitable solvents include tetrahydrofuran (THF), acetone, methyl ethyl ketone (MEK), methyl isobutyl ketone (MIBK), pyran, propylene carbonate, cyclohexanone, acetophenone, diethyl ether, ethylene glycol, "Oxitol" (Registered Trade Mark) (2-ethoxyethanol), "Cellosolve" (Registered Trade Mark) and "Cellosolve" Acetate (Registered Trade Mark), morpholine, ethyl alcohol, dimethylsulphoxide (DMSO), and dimethylformamide (DMF).

Suitable inorganic materials include silica gel, alumina, "Cabosil" (Registered Trade Mark), mica clays, talcs, glasses asbestos, gypsum, anhydrous $CaSO_4$, and titanium dioxide ($TiO_2$).

The invention will be further understood from the following illustrative Examples, in which, unless otherwise indicated, parts and percentages in the Examples are parts and percentages by weight.

Epoxy Resin A or polyether A is a liquid glycidyl polyether of 2,2 - bis(4 - hydroxyphenyl)propane having an epoxide equivalent (WPE) of 175—190 and an average molecular weight of about 350.

Epoxy Resin B is a solid glycidyl polyether of 2,2 - bis(4 - hydroxyphenyl)propane having a WPE of about 500 and an average molecular weight of about 900.

Examples I to XII are not within the scope of the invention.

Example I

Into a 500 ml beaker were placed 150 grams of Polyether A, a solution of 1.5 g 2-ethoxyethanol and 0.75 g of $LiBF_4$. The mixture was stirred until homogeneous and poured into a "HDT" mould to produce test specimens of 1.25 cm×1.25 cm×12.5 cm (1/2"×1/2"×5") and a "plate" mould 10 cm×20 cm×0.3 cm (4"×8"×1/8"). The material was set aside at ambient temperature for 1 hour (exotherm observed) and then cured at 70°C for 7 hours and post cured at 120°C for 2 hours. The cured composition had the following physical properties:

| | |
|---|---|
| HDT | 75°C |
| Extension @ break | 2.3% |
| Tensile stress at break, MPa (psi) | 48.3 (7000) |
| Young's modulus, MPa (psi) | 3,520 (510,000) |
| Izod, J/M (ft-lbs/in) notch | 16 (0.3) |
| Retention of shear modulus at 70°C; percentage of ambient temperature shear modulus retained at 70°C in a torsion test | 51% |

Example II

Into a 25 ml polypropylene beaker were placed 10 grams of Polyether A and a solution containing 0.1

grams $LiBF_4$ and 0.1 gram of water. The mixture was stirred rapidly and 2 grams of this mixture were placed in a vial immersed in an oil bath at 150°C. The mixture exothermed to 236°C in 66 seconds and upon being removed from the bath was a solid cured mass.

Example III

10 grams of Polyether A were mixed with a solution containing 0.1 gram $Ca(BF_4)_2$, and 0.2 g 2-ethoxyethanol. After rapid mixing by hand, the mass cured and solidified within 20 seconds after the initial contact at ambient temperature.

The procedure of Example III was essentially repeated using $NaBF_4$, $KBF_4$, $NH_4BF_4$ and $NH_4PF_6$ in lieu of $Ca(BF_4)_2$. Even after heating 2 gram samples at 100°C to 150°C for periods exceeding 1 day, no appreciable gel was observed, thus indicating clearly the general ineffectiveness of the Na, K and $NH_4$ salts of fluoboric acid.

Examples IV and V

The procedure of Example III was essentially repeated using the following compositions:

| Composition A (Example IV) | Parts by weight |
|---|---|
| Polyether A | 10 |
| $Mg(BF_4)_2$ | 0.10 |
| Water | 0.23 |
| Composition B (Example V) | |
| Polyether A | 10 |
| $Ca(BF_4)_2$ | 0.10 |
| 2-ethoxyethanol | 0.25 |

The compositions were stirred by hand, poured on a gel plate and spread with a doctor blade into 250 micrometer film. The film from Composition A cured hard in less than 30 minutes at room temperature and could be peeled from the plate. The film from Composition B cured in 1 hour and 15 minutes at room temperature. No significant exotherm was observed in these thin films, indicating truly ambient cure.

Example VI

The procedure of Example III was repeated but omitting the 2-ethoxyethanol. Similar results were obtained.

Example VII

The procedure of Example III was repeated wherein an equivalent amount of the following solvents were used: tetrahydrofuran, acetone, methyl isobutyl ketone, methyl ethyl ketone, acetophenone, cyclohexanone, diethyl ether, ethylene glycol and propylene carbonate. Similar results were obtained.

Example VIII

The procedure of Example I was essentially repeated wherein 10 grams of Epoxy Resin B were ground, mixed with 0.1 gram of $LiBF_4$ (dried in vacuum) and placed on a 100°C gel plate. The solid resin melted and gelled in 42 seconds and full hardness was exhibited 2 hours. The cured resin could not be melted again, thus proving it had cured. Neat Epoxy Resin B can be melted and remelted.

Example IX

This Example illustrates the preparation of a preferred metal catalyst (curing agent) powder. 1 gram of $LiBF_4$ was dissolved in 10 grams of 2-ethoxyethanol. Then, 1 gram of "Cabosil" (Registered Trade Mark) fumed silica was added and stripped under vacuum for 4 hours at 40°C. 3.18 grams of white free-flowing powder were obtained.

One hundred parts by weight of Polyether A and of Polyether B could be effectively cured with 3 parts by weight of the above curing agent in less than 20 minutes at room temperature.

Example X

The procedure of Example IX was essentially repeated wherein a catalyst was prepared by mixing 0.27 grams of $Ca(BF_4)_2 \cdot 4H_2O$, 0.42 grams of 2-ethoxyethanol and 0.31 grams of "Cabosil" (Registered Trade Mark) fumed silica. Then 0.1 grams of the resulting dry catalyst was mixed with 0.85 grams of Epoxy Resin A in a hole 1.25 cm (1/2") deep and 0.63 cm (1/4") in diameter in the side of a 19 kg (42 pound) Portland concrete block by agitating a 0.48 cm (3/16") eye bolt for thirty seconds. After 3 minutes, it was possible to lift the concrete block by the eye bolt.

Example XI

The procedure of Example X was essentially repeated wherein mica, silica gel, talc, anhydrous $CaSO_4$, and Bentonite clay was used in lieu of the "Cabosil". Essentially the same results were obtained except that more catalyst based on Bentonite clay was required to produce a good cure, i.e. *ca* 5 phr or more.

Example XII

The example illustrates the effectiveness of the instant metal salts as curing agents for epoxy resins. The components were mixed together and the gel (cure) time was determined at preselected temperatures (RT=ambient temperature). The results of representative experiments are tabulated in Table I.

TABLE I

| Polyether | pbw | Curing agent | pbw | Solvent/pbw | Gel time/temp. |
|---|---|---|---|---|---|
| A | 100 | $Ca(BF_4)_2$ | 1 | 2-ethoxyethanol 2 | 20 s/RT (1 hr 10 min in a film RT) |
| A | 80 | $Ca(BF_4)_2$ | 1 | 2-ethoxyethanol 20 | 18 s/100°C |
| A | 100 | $LiPF_6$ | 1 | 2-ethoxyethanol 2 | 2 1/2 min/RT |
| A | 100 | $LiBF_4$ | 1 | $H_2O$ 1 | 66 s/150°C |
| A | 100 | $Mg(BF_4)_2$ | 1 | $H_2O$ 2.3 | 30 min/RT-250 micrometer film |
| A | 100 | $Ca(BF_4)_2$ | 1 | Toluene 100 cyclohexanone 2 | 2 1/2 min/RT |
| A | 100 | $Mg(BF_4)_2$ | 1.2 | Toluene 100 cyclohexanone 2.2 | 1/3 min/RT |
| B | 100 | $LiBF_4$ | 1 | — | 0.7 min/100°C |

Example XIII

3.9 parts by weight of the catalyst of Example IX and 20 parts by weight (pbw) of styrene were introduced into Kettle B of an "Accuratio" (Registered Trade Mark) Reaction Injection Molding (RIM) machine. 100 parts by weight of Polyether A were placed into Kettle B of the RIM machine. The machine was then operated to produce a final mixture of 100 pbw Polyether A, 20 pbw of styrene and 3.9 pbw of catalyst (1.0 pbw of $LiBF_4$) and injected into a 0.3 cm×20 cm×25 cm (1/8"×8"×10") flat plate mold at 100°C. The mold was opened after 15 minutes and the solid plate removed, having the following properties:

| | |
|---|---|
| HDT, °C | 109 |
| Elongation at break, % | 2.5 |
| Tensile stress at yield, MPa (psi) | 32.4 (4700) |
| Tensile modulus, MPa (psi) | 2,830 (410,000) |
| Retention of shear modulus at 70°C, % | 94 |
| Shear modulus, MPa (psi) | 1,060 (154,000) |
| Izod impact, J/M (ft-lb/in) | 16 (0.3) |
| Charpy impact J/M (ft-lb/in) | 11 (0.2) |

Example XIV

This example illustrates the effectiveness of the present solid salts as curing agents for epoxy-styrene blends. The components were mixed together and the gel (cure) time was determined at preselected temperatures. The results of representative experiments are tabulated in Table II.

TABLE II

| Polyether A pbw | Styrene pbw | Catalyst/ pbw | Solvent/ pbw | Cure or gel time/temp. °C |
|---|---|---|---|---|
| 100 | 25 | $Ca(BF_4)_2$/0.5 | 2-ethoxyethanol/1 | 2 minutes @ 20°C. Exothermed in HDT bars |
| 80 | 20 | $Ca(BF_4)_2$/1 | 2-ethoxyethanol/2 | 18 seconds @ 20°C. Cured in 10 minutes @ 100°C |
| 80 | 20 | $Mg(BF_4)_2$/1 | 2-ethoxyethanol/3 | 60 seconds @ 40°C. Exothermed to 215°C in 1 minute |
| 80 | 20 | $LiBF_4$/1 | 2-ethoxyethanol/2 | Cured 2 hours @ 125°C to produce good casting & HDT bars |
| 80 | 20 | $Mg(BF_4)_2$/1 | $H_2O$/2.3 | 135 minutes @ 20°C in 0.025 cm film |

**Claims**

1. A curable composition comprising:
(1) an epoxy compound having on average more than one epoxy group per molecule,
(2) a curing amount of at least one metal salt catalyst of formula

$$M(X\ F_n)_p$$

where M is lithium or a Group II metal, X is boron, arsenic, antimony or phosphorus, n is 4 when X is boron and is 6 when X is arsenic, antimony or phosphorus and p is 1 when M is lithium and is 2 when M is a Group II metal, and
(3) an ethlenically unsaturated monomer.

2. A composition according to claim 1, wherein the ethylenically unsaturated monomer is styrene.

3. A composition according to claim 1 or 2, wherein M is lithium, calcium or magnesium.

4. A composition according to any one of claims 1 to 3, wherein X is boron or phosphorus.

5. A process for preparing a composition according to any of claims 1 to 4, which comprises preparing a catalyst composition by blending the metal salt catalyst with a solvent and a finely divided inert inorganic material, and mixing the resulting composition with the ethylenically unsaturated compound and the epoxy compound.

**Patentansprüche**

1. Härtbare Masse, umfassend
(1) eine Epoxy-Verbindung mit im Mittel mehr als einer Epoxy-Gruppe im Molekül,
(2) eine härtende Menge zumindest eines Metall-Salz-Katalysators der Formel

$$M(X\ F_n)_p$$

in der M Lithium oder ein Metall der Gruppe II (des Periodensystems), X Bor, Arsen, Antimon oder Phosphor ist, n 4 ist, wenn X Bor und 6 ist, wenn X Arsen, Antimon oder Phosphor bedeutet, und p 1 ist, wenn M Lithium ist und 2, wenn M ein Metall der Gruppe II ist, und
(3) ein ethylenisch ungesättigtes Monomer.

2. Masse nach Anspruch 1, wobei das ethylenisch ungesättigte Monomer Styrol ist.

3. Masse nach Anspruch 1 oder 2, wobei M Lithium, Calcium oder Magnesium ist.

4. Masse nach einem der Ansprüche 1 bis 3, wobei X Bor oder Phosphor ist.

5. Verfahren zur Herstellung einer Masse nach einem der Ansprüche 1 bis 4, umfassend die Herstellung einer Katalysator masse durch Vermischen des Metall-Salz-Katalysators mit einem Lösungsmittel und einem feinteiligen inerten anorganischen Material und Vermischen der erhaltenen Masse mit der ethylenisch ungesättigten Verbindung und der Epoxy-Verbindung.

**Revendications**

1. Une composition durcissable comprenant:
1) un composé époxy possédant, en moyenne, plus d'un groupe époxy par molécule,

2) une quantité durcissante d'au moins un catalyseur à base de sel métallique de formule

$$M(X\ Fn)_p$$

dans laquelle M est le lithium ou un métal du groupe II, X est le bore, l'arsenic, l'antimoine ou le phosphore, n est 4 lorsque X est du bore et est 6 lorsque X est l'arsenic, l'antimoine ou le phosphore, p est 1 lorsque M est le lithium et est 2 lorsque M est un métal du groupe II, et

3) un monomère éthyléniquement insaturé.

2. Composition selon la revendication 1, dans laquelle le monomère éthyléniquement insaturé est le styrène.

3. Composition selon la revendication 1 ou 3, dans laquelle M est le lithium, le calcium ou le magnésium.

4. Composition selon l'une quelconque des revendications 1 à 3, dans laquelle X est le bore ou le phosphore.

5. Un procédé pour la préparation d'une composition selon l'une quelconque des revendications 1 à 4, qui consiste à préparer une composition de catalyseur par mélange du catalyseur à base de sel métallique avec un solvant et une matière inorganique inerte finement divisée et à mélanger la composition résultante avec le composé éthyléniquement insaturé et le composé époxy.